# EUROPEAN PATENT SPECIFICATION

(11) **EP 1 159 358 B1**
(45) Date of publication and mention of the grant of the patent: **28.12.2005**
(21) Application number: 00900261.9
(22) Date of filing: 12.01.2000
(51) Int. Cl.: C09D 11/00

(54) **PRINTING INKS**
DRUCKFARBEN
ENCRES D'IMPRESSION

(30) Priority: 04.02.1999 GB 9902386
(43) Date of publication of application: 05.12.2001
(73) Proprietor: Avecia Inkjet Limited, Blackley, Manchester M9 8ZS (GB)
(72) Inventor: ROTHWELL, Geoffrey Richard, Blackley, Manchester M9 8ZS (GB); THETFORD, Dean, Blackley, Manchester M9 8ZS (GB)
(74) Representative: Mayall, John
(86) International application number: PCT/GB2000/000060
(87) International publication number: WO 2000/046313

(56) References cited:
- WO-A-97/15633
- GB-A- 2 001 083
- US-A- 5 837 046
- DATABASE WPI Derwent Publications Ltd., London, GB; AN 1987-046767[25] XP002132649 & JP 62 004433 A (DAINIPPON INK & CHEM KK ; KAWAMURA INST CHEM RES), 10 January 1987 (1987-01-10)

## Description

The present invention relates to non-aqueous printing inks containing pigments and their use in "drop-on-demand" ink jet printers.

One of the most important class of ink jet printers is the so-called "drop-on-demand" (hereinafter DOD) printer, where droplets of ink are expelled from a print head to make a print mark only when desired to form an image during the printing process. DOD printers use either an electrostatically accelerated ink jet or sequence of droplets which are ejected by pressure impulse actuation. In the latter type of DOD printer, each ink droplet is individually ejected from a nozzle in the print head by means of pressure pulses which are induced, for example, by a piezo-electric actuator acting on the ink in a channel supplying the nozzle or by generation of a vapour bubble in response to a thermal pulse.

One particular problem encountered in continuous printing with ink jet printers is that a small amount of the tail of the droplet being ejected tends to separate from the droplet and collect on that part of the surface of the print head immediately surrounding the nozzle. With high speed printers, there is less opportunity for this tail of the droplet to recede back into the nozzle before the next pressure pulse which results in the build up of an ink residue on the surface of the print head giving a distorted printed mark. This is particularly marked in high dot density printers and especially colour printers. This has led to the introduction of coatings for the print head to reduce the accumulation of such residues but even so the print head still requires cleaning resulting in down-time of the printer.

Improved print performance in DOD printers has been sought by advances in printing ink formulations. Thus, WO 97/15633 discloses a printing ink containing a pigment which is dispersed in a non-aqueous medium using a polyester amine dispersant where some of the basic amine groups in the dispersant are neutralised with an acid or acidic phenolic compound. These printing inks are stated to exhibit a reduction in the amount of residual ink which forms on the print head at the end of each pulse by improving the rate at which the tail of the droplet retreats into the nozzle of the print head. One method of determining the propensity of an ink droplet to retreat back into the nozzle is to measure the Receding Meniscus Velocity (hereinafter RMV) of the printing ink on a surface, such as a fluorosilane coated metal surface. One such method of measuring RMV is described in WO 97/15633.

It has now been found that printing inks exhibiting a superior RMV can be made by dispersing a pigment in a non-aqueous medium by means of a dispersant containing a higher proportion of polyester to those described in WO 97/15633.

According to a first aspect of the present invention there is provided a drop on demand ink jet printing ink comprising a pigment, a substantially non-aqueous medium and a dispersant of Formula (1) 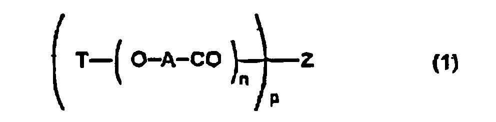 wherein
T is hydrogen or a polymerisation terminating group;
A is C₆₋₂₀-linear alkylene or alkenylene:
Z is the residue of a polyamine or polyimine wherein the number-average molecular weight is from 5.000 to 100,000;
n is frorn 2 to 10;
p is not less than 2:
the weight ratio of (T-(O-A-CO)ₙ)̵ₚ to Z is from 5:1 to 20:1; and
the dispersant is in the form of its free-base.

The dispersant of Formula 1 is hereinafter referred to as The Dispersant.

When T is a polymerisation terminating group, it is preferably the residue of a carboxylic acid of formula T-COOH wherein T is aliphatic which may be linear or branched, saturated or unsaturated but is preferably linear and preferably saturated. The number of carbon atoms in T can be as high as 50. It is preferred that T contains not less than 8, more preferably not less than 12 and especially not less than 14 carbon atoms. It is also preferred that T contains not greater than 30, preferably not greater than 25 and especially not greater than 20 carbon atoms.

Preferably. A contains not less than 10, more preferably not less than 12 and especially not less than 14 carbon atoms.

The integer n is preferably not less than 3 and especially not less than 4. It is also preferred that n is not greater than 8 and especially not greater than 6.

The integer p is preferably not greater than 2000 and especially not greater than 1000.

Z is preferably the residue of polyallylamine, polyvinylamine, more preferably poly(C₂₋₄-alkyleneimine) (hereinafter PAI) and particularly poly(ethyleneimine) (PEI).

The PAI may be linear or more preferably branched.

The Dispersant is obtainable by reacting the polyamine or polyimine with an end-capped polyoxyalkylenecarbonyl acid or polyoxyalkenylonecarbonyl acid (hereinafter TPOAC acid) of formula 2: 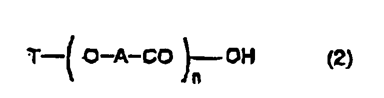 wherein T, A, and n are as defined hereinbefore.

The number-average molecular weight (Mn) of the TPOAC acid is preferably not less than 500 and especially not less than 800. It is also preferred that the number-average molecular weight of the TPOAC acid is not greater than 3000 and especially not greater than, 2000.

The weight ratio of (T-(O-A-CO)ₙ-)ₚ to Z is preferably not less than 7:1, more preferably not less than 8:1 and especially not less than 9:1. It is also preferred that the weight ratio of (T-(O-A-CO)ₙ)̵ₚ to Z is not greater than 17:1, more preferably not greater than 15:1 and especially not greater than 13:1. Particularly useful effects have been obtained when the weight ratio of (T-(O-A-CO)ₙ)̵ₚ to Z is from 10:1 to 15:1 and especially from 10:1 to 13:1.

Particularly useful effects have been obtained when the TPOAC add is derived from ricinoleic acid and especially 12-hydroxystearic acid, particularly commercially available material which contains a small amount of stearic acid as impurity which acts as a polymerisation terminating or end-cap group in the preparation of the TPOAC add.

The Dispersants are made by a similar process to Example 7/Agent H disclosed in GB 2.001,083.

The pigment may be from any of the recognised classes of pigments described, for example, in the Third Edition of the Colour index (1971) and subsequent revisions of, and supplements thereto, under the chapter heading "Pigments". Examples of inorganic pigments are titanium dioxide, zinc oxide, Prussian blue, cadmium sulphide, iron oxides, vermillon, ultramarine and the chrome pigments, including chromates, molybdates and mixed chromates and sulphates of lead, zinc, barium, calciurn and mixtures and modifications thereof which are commercially available as greenish-yellow to red pigments under the names primrose, lemon, middle, orange, scarlet and red chromes. Examples of organic pigments are those from the azo, disazo, condensed azo, thioindigo, indanthrone, isoindanthrone, anthanthrone, anthraquinone, isodibenzanthrone, triphendioxazine, quinacridone, perylene, diketopyrrolopyrrole and phthalocyanine series, especially copper phthalocyanine and its nuclear halogenated derivatives, and also lakes of acid, basic and mordant dyes. Carbon black, although strictly inorganic, behaves more like an organic pigment in its dispersing properties. Preferred organic pigments are phthalocyanines, especially copper phthalocyanines, monoazos, disazos, indanthrones, anthranthrones, quinacridones and carbon blacks.

The printing ink is preferably made by milling the pigment in the non-aqueous medium in the presence of The Dispersant to give a pigment dispersion which is subsequently let down to give the printing ink.

Whereas the non-aqueous may contain up to 2% by weight water it is preferably free from water.

The non-aqueous medium is preferably a substantially non-polar organic liquid.

Substantially non-polar, organic liquids which may be used, either alone or in admixture are aromatic hydrocarbons, such as toluene and xylene, halogenated aliphatic and aromatic hydrocarbons, such as trichloro-ethylene, perchloroethylene and chlorobenzene and particularly aliphatic and aromatic hydrocarbons having at least 6 carbon atoms including mixtures thereof, for example, refinery distillation products and by products.

Preferably, the non-aqueous medium has a polar solubility parameter of not greater than 7.0 MPa^{½} as measured using the method of Hansen, C.M. and Skaarup, K., Journal of Paint Technology, 39 No. 51, 1967, pages 511-514 as described by Patton, T.C. in "Paint Flow and Pigment Dispersion", second edition, Wiley Printerscience, 1979. Examples of non-aqueous media with polar solubility parameters of 7.0 MPa½ or less are non-polar organic liquids including mixtures with polar organic liquids wherein the amount of polar liquid is preferably less than 45%, more preferably less than 30%, even more preferably less than 20% and especially less than 10% by weight based upon the weight of the mixture of non-polar and polar organic liquids.

It is especially preferred that the non-aqueous medium with a polar solubility parameter not greater than 7.0 MPa½ is an aliphatic hydrocarbon such as those commercially available as Exxsol, Solvesso, Exxon naphtha, Isopar, Pegasol, Lytol and Shellsol.

Particularly suitable non-aqueous media are mixtures of an aliphatic hydrocarbon and a C₁₀₋₃₀-aliphatic fatty alcohol which may be linear or branched, saturated or unsaturated. Examples of suitable alcohols are stearyl, lauryl and especially oleyl alcohol.

The dispersion of the pigment in the substantially non-aqueous medium may contain other ingredients which are commonly used in the printing ink industry such as binders, fluidising agents such as those described in GB-A-1508576 and GB-A-2108143, antisedimentation agents, levelling agents and preservatives.

Preferably the ink contains from 2 to 20%, more preferably from 4 to 15% pigment based upon the weight of the ink.

As noted hereinbefore, it is preferable to prepare a concentrated dispersion of the pigment which is subsequently diluted to form the final printing ink.

The dispersions typically contain from 5 to 95% by weight of the pigment, the precise quantity depending on the nature of the pigment and the quantity depending on the nature of the pigment and the relative densities of the pigment and the non-aqueous medium. For example, a dispersion which contains an organic pigment, preferably contains from 15 to 60% by weight of the solid whereas a dispersion in which the solid is an inorganic pigment, preferably contains from 40 to 90% by weight of the pigment based on the total weight of dispersion.

The amount of The Dispersion is preferably from 10 to 100%, more preferably from 10% to 70% and especially from 20% to 50% based on the amount of pigment.

The dispersion may be obtained by any of the conventional methods known for preparing dispersions. Thus, the pigment, the non-aqueous medium and The Dispersant may be mixed in any order, the mixture then being subjected to a mechanical treatment to reduce the particles of the pigment to an appropriate size, for example by ball milling, bead milling, gravel milling or plastic milling until the dispersion is formed. Alternatively, the solid may be treated to reduce its particle size independently or in admixture with either the non-aqueous medium or the dispersant, the other ingredient or ingredients then being added and the mixture being agitated to provide the dispersion.

If a composition containing pigment and The Dispersant is required in dry form, the non-aqueous medium is preferably volatile so that it may be readily removed from the particulate pigment by a simple separation means such as evaporation. It is preferred, however, that the composition is a dispersion.

If the dry composition consists essentially of The Dispersant and a pigment, it preferably contains at least 0.2%, more preferably at least 0.5% and especially at least 1.0% dispersant based on weight of the pigment. Preferably the dry composition contains not greater than 100%, preferably not greater than 50%, more preferably not greater than 20% and especially not greater than 10% by weight based on the weight of the pigment.

The printing ink may additionally contain an RMV modifier which may be a Lewis acid, an organic or inorganic acid or a phenolic compound. Examples of RMV modifiers are acetic, citric, tartaric, toluic and p-naphthoic acids, naphthalene-2-sulphonic acid and p-toluene sulphonic acid; resorcinol and 2-naphthol; alkyl partial esters of phosphorus acids and linear phenolic polymers such as novolak resins. The preferred RMV modifier is a novolak resin, especially those containing a 4-alkyl substituent and particularly those with a C₁₋₁₀- and especially a C₄₋₈-alkyl group. Useful effects have been obtained with Uravar FN5 as RMV modifier.

The most suitable RMV for any given printing ink can be readily determined using the protocol described in WO 97/15633 which protocol may also be used to establish the optimum amount of RMV modifier. The amount of RMV modifier in the ink is generally not greater than 10%, preferably not greater than 5% and especially not greater than 2%.

In view of the foregoing preferences an especially preferred printing ink according to the first aspect of the invention comprises a pigment, a dispersant of the Formula (1), a substantially non-aqueous medium and a RMV modifier as hereinbefore defined.

The printing inks according to the first aspect of the present invention preferably have a viscosity at 25°C of less than 50cP, more preferably less than 20cP, especially less than 15cP and more especially from 7 to 15cP.

According to a second aspect of the present invention there is provided a process for printing an image on a substrate comprising applying thereto by means of a drop on demand ink jet printer a printing ink according to the first aspect of the invention.

The preferred inks used in this process are the preferred inks hereinbefore described in relation to the first aspect of the present invention.

The ink jet printer preferably applies the ink to the substrate in the form of droplets which are ejected through a small orifice onto the substrate. Preferred ink jet printers are piezoelectric ink jet printers and thermal ink jet printers. In thermal ink jet printers, programmed pulses of heat are applied to the ink in a reservoir by means of a resistor adjacent to the orifice, thereby causing the ink to be ejected in the form of small droplets directed towards the substrate during relative movement between the substrate and the orifice. In piezoelectric ink jet printers the oscillation of a piezoelectric crystal causes ejection of the ink from the orifice.

The substrate is preferably paper, plastic, a textile, metal or glass, more preferably paper, plastic, an overhead projector slide or a textile material.

Preferred papers are plain or treated papers which may have an acid, alkaline or neutral character. Examples of commercially available papers include, HP Premium Coated Paper, HP Photopaper (all available from Hewlett Packard Inc), Stylus Pro 720 dpi Coated Paper, Epson Photo Quality Glossy Film, Epson Photo Quality Glossy Paper (available from Seiko Epson Corp.), Canon HR 101 High Resolution Paper, Canon GP 201 Glossy Paper, Canon HG 101 High Gloss Film (all available from Canon Inc.), Wiggins Conqueror paper (available from Wiggins Teape Ltd), Xerox Acid Paper and Xerox Alkaline paper.

Preferred textile materials are natural, synthetic and semi-synthetic materials. Examples of preferred natural textile materials include wool, silk, hair and cellulosic materials, particularly cotton, jute, hemp, flax and linen. Examples of preferred synthetic and semi-synthetic materials include polyamides, polyesters, polyacrylonitriles and polyurethanes.

A third aspect of the present invention provides a substrate printed with an ink according to the first aspect of the present invention, or by means of the process according to the second aspect of the present invention.

A fourth aspect of the present invention provides an ink jet printer cartridge containing an ink according to the first aspect of the present invention.

The invention is further illustrated by the following examples where all references to amounts are in parts by weight unless indicated to the contrary.

### Examples 1 to 3 and Comparative Example A: Black Inks

Millbases were prepared having the composition outlined in Table 1 below by milling the components as indicated in the presence of glass beads (3mm, 125 parts) on a horizontal Red Devil shaker for 90 minutes. After milling, the beads were removed and the millbase diluted with oleyl alcohol (7.1 parts, Novol ex Croda Chemicals) and an aliphatic hydrocarbon mineral oil (28.4 parts, Lytol ex Witco) to give a printing ink.

The Receding Meniscus Velocity of the inks (RMV) was measured at 30°C using the method described in WO 97/15633. The results are given in Table 2 below which clearly show that the dispersants according to the present invention (Dispersants (1), (2) and (3)) provide inks which exhibit a superior (higher) RMV compared to Dispersant A (a comparative dispersant which has a weight ratio of (T-(O-A-CO)ₙ-)ₚ to Z is 3.5:1 and therefore outside the scope of the present invention).

**Table 1**

| **Example** | **1** | **2** | **3** | **A** |
|---|---|---|---|---|
| **Millbase** | **1** | **2** | **3** | **4** |
| Regal 250R (pigment) | 5.00 | 5.00 | 5.00 | 5.00 |
| Dispersant 1 | 1.37 | - | - | - |
| Dispersant 2 | - | 1.37 | - | - |
| Dispersant 3 | - | - | 1.37 | - |
| Dispersant A | - | - | - | 1.71 |
| Solsperse 5000 (fluidising agent) | 0.09 | 0.09 | 0.09 | 0.09 |
| Hydrocarbon solvent | 3.54 | 3.54 | 3.54 | 3.20 |
| | **10.00** | **10.00** | **10.00** | **10.00** |
| Footnote to Table 1 Regal 250R is carbon black pigment ex Cabot Corporation Dispersant 1 is a 50% solution of PHS/PEI (7:1) in Lytol Dispersant 2 is a 50% solution of PHS/PEI (10:1) in Lytol Dispersant 3 is a 50% solution of PHS/PEI (13:1) in Lytol Dispersant A is a 40% solution of PHS/PEI (3.5:1) in Lytol Solsperse 5000 is a quaternary ammonium salt of sulphonated copper phthalocyanine ex Zeneca Ltd. Hydrocarbon solvent is Lytol ex Witco. Dispersant A is made by the process described in Example 7/Agent H in GB 2 001 083. Dispersants 1 to 3 are made by a similar process to that described for Dispersant A except that the ratio of poly(12-hydroxystearic acid) to polyethyleneimine (PHS/PEI) is as indicated in parenthesis. | | | | |

**Table 2**

| **Millbase** | **Dispersant** | **RMV (mm/sec at 30°C)** |
|---|---|---|
| 1 | 1 | 8.9 |
| 2 | 2 | 10.0 |
| 3 | 3 | 8.7 |
| 4 | A | 7.9 |
| Footnote to Table 2 Dispersants 1-3 and A are as hereinbefore described in the footnote to Table 1. | | |

### Examples 4 to 6 and Comparative Example B: Red Inks

Millbases were prepared containing a red pigment by a similar method to that described in Examples 1 to 3 by milling together the components listed in Table 3 below. These millbases were then diluted by adding aliphatic hydrocarbon solvent (27.0 parts, Lytol ex Witco). The RMV was again measured using the method described in WO 97/15633. The results are given in Table 4 and show that those inks prepared using dispersants with a higher PHS to PEI ratio exhibit superior RMV to inks prepared using Dispersant A.

**Table 3**

| **Example** | **4** | **5** | **6** | **B** |
|---|---|---|---|---|
| **Millbase** | **5** | **6** | **7** | **8** |
| Hostaperm Red E5B02 | 3.33 | 3.33 | 3.33 | 3.33 |
| Dispersant 1 | 2.34 | - | - | - |
| Dispersant 2 | - | 2.34 | - | - |
| Dispersant 3 | - | - | 2.34 | - |
| Dispersant A | - | - | - | 2.92 |
| Hydrocarbon solvent | 4.33 | 4.33 | 4.33 | 3.75 |
| | **10.0** | **10.0** | **10.0** | **10.0** |
| Footnote to Table 3 Hostaperm Red E5B02 is a red pigment ex Hoechst. Dispersants 1 to 3, dispersant A and hydrocarbon solvent are as explained in the footnote to Table 1. | | | | |

**Table 4**

| **Millbase** | **Dispersant** | **RMV (mm/sec at 30°C)** |
|---|---|---|
| 5 | 1 | 2.7 |
| 6 | 2 | 2.9 |
| 7 | 3 | 4.6 |
| 8 | A | <1 |
| Footnote to Table 4 Dispersants 1 to 3 and A are as hereinbefore described in the footnote to Table 1. | | |

### Example 7 and Comparative Example C: Blue Inks

A blue millbase was prepared by milling together the components listed in Table 5 below in a glass vial in the presence of 3mm glass beads (40 parts) for 4 hours on a Red Devil horizontal shaker.

| | Example 4 | Comparative Example C |
|---|---|---|
| Blue Pigment | 3 | 3 |
| Dispersant A | - | 3 |
| Dispersant 2 | 2.4 | - |
| Solsperse 5000 | 0.3 | 0.3 |
| Hydrocarbon Solvent | 4.3 | 3.7 |
| Footnote to Table 5 The Blue Pigment is Irgalite Blue GLVO ex Ciba-Geigy. Dispersants A and 2 and Hydrocarbon Solvent are as explained in the footnote to Table 1. | | |

The glass beads were then removed from the millbase which was let down by adding oleyl alcohol (13.3 parts, Novol ex Croda Chemicals) and hydrocarbon solvent (36.8 parts, Lytol ex Witco) to give a printing ink.

The RMV of each ink was determined using the method described in WO 97/15633. The ink prepared from the millbase of Example 4 exhibited an RMV of 5.9 compared with an RMV of 3.4 for the ink prepared from the millbase of Comparative Example C.

### Example 8 and Comparative Example D: Blue Inks

A novolak resin (1 parts of 10% w/w solution of Uravar FN-5 in Lytol) was added to the printing ink prepared as described in Example 7 and Comparative Example C (10 parts) with RMV again measured. These are inks of Example 8 and Comparative Example D, respectively which exhibited RMV of 10.3 and 7.9, respectively. Again, the ink prepared using Dispersant 2 exhibited superior RMV to that prepared using Dispersant A.

### Example 9 and Comparative Example E: Yellow Inks

Millbases were prepared in a similar manner to that described in Example 7 and Comparative Example C except using the components and amounts listed in Table 6 below.

**Table 6**

| | Example 9 | Comparative Example E |
|---|---|---|
| Yellow Pigment | 3 | 3 |
| Dispersant A | - | 3 |
| Dispersant 2 | 2.4 | - |
| Hydrocarbon Solvent | 4.6 | 4 |
| Footnote to Table 6 The yellow pigment is Paliotol Yellow D1155 ex BASF Dispersants 2 and A and Hydrocarbon Solvent are as explained in the footnote to Table 1. | | |

A printing ink was prepared by removing the beads and diluting with a letdown consisting of oleyl alcohol (10.8 parts) and hydrocarbon solvent (39.1 parts Lytol). The RMV of the ink prepared from the millbase of Example 9 was 10.2 and that prepared from the mill base of Comparative Example E was 9.3.

### Example 10 and Comparative Example F: Yellow Inks

Novolak resin (1.25 parts of 10%w/w solution of Uravar FN-5 in Lytol) was added to the inks of Example 9 and Comparative Example E respectively to give inks of Example 10 and F. The RMV of the ink of Example 10 was 13.2 compared with 12.2 for the ink of Comparative Example F.

## Claims

1. A drop on demand ink jet printing ink comprising a pigment, a substantially non-aqueous medium and a dispersant of formula 1 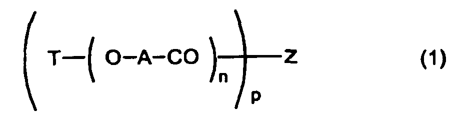 wherein
T is hydrogen or a polymerisation terminating group;
A is C₈₋₂₀-linear alkylene;
Z is the residue of a polyamine or polyimine wherein the number-average molecular weight is from 5,000 to 100,000;
n is from 2 to 10;
p is not less than 2;
the weight ratio of (T-(O-A-CO)ₙ)̵ₚ to Z is from 5:1 to 20:1; and
the dispersant is in the form of its free-base.

2. A printing ink as claimed in claim 1 wherein the weight ratio of (T-(O-A-CO)ₙ)̵ₚ to Z is from 9:1 to 13:1.

3. A printing ink as claimed in either claim 1 or claim 2 wherein the dispersant is obtainable by reacting the polyamine or polyimine with an end-capped polyoxyalkylenecarbonyl acid or polyoxyalkenylenecarbonyl acid (TPOAC acid) of formula 2: 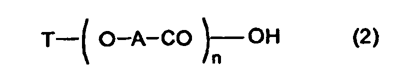 wherein T, A and n are as defined in claim 1.

4. A printing ink as claimed in claim 3 wherein the TPOAC acid is derived from 12-hydroxystearic acid.

5. A printing ink as claimed in either claim 3 or claim 4 wherein the number-average molecular weight of the TPOAC acid is from 800 to 2000.

6. A printing ink as claimed in any one of the preceding claims wherein Z is the residue of polyethyleneimine.

7. A printing ink as claimed in any one of claims 1 to 6 wherein the non-aqueous medium is an aromatic or aliphatic hydrocarbon or mixtures thereof.

8. A printing ink as claimed in claim 7 which additionally comprises a C₁₀₋₃₀-aliphatic fatty alcohol.

9. A printing ink as claimed in any one of claims 1 to 8 wherein the non-aqueous medium has a solubility parameter of 7.0 MPa½ or less.

10. A printing ink as claimed in any one of claims 1 to 9 which additionally comprises a fluidising agent.

11. A printing ink as claimed in any one of claims 1 to 10 which additionally comprises a Receding Meniscus Velocity (RMV) modifier.

12. A printing ink as claimed in claim 11 where the RMV modifier is a linear phenolic polymer.

13. A printing ink according to any one of the preceding claims wherein the ink has a viscosity at 25°C of less than 50cP.

14. A process for printing an image on a substrate comprising applying thereto by means of a drop on demand ink jet printer a printing ink according to any one of the preceding claims.

15. A substrate printed with an ink according to any one of claims 1 to 13, or by means of the process according to claim 14.

16. An ink jet printer cartridge containing an ink according to any one of claims 1 to 13.

## Patentansprüche

1. Drucktinte für den Tintenstrahldruck nach dem Drop-on-Demand-Verfahren, enthaltend ein Pigment, ein im wesentlichen nichtwäßriges Medium sowie ein Dispergiermittel der Formel 1 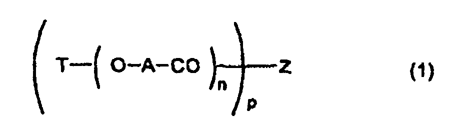 wobei
T für Wasserstoff oder für eine polymerisationsterminierende Gruppe,
A für C₈₋₂₀-lineares Alkylen,
Z für den Rest eines Polyamins oder eines Polyimins steht, wobei das zahlenmittlere Molekulargewicht bei 5.000 bis 100.000 liegt,
n für 2 bis 10 und
p für mindestens 2 steht,
das Gewichtsverhältnis von (T-(O-A-CO)ₙ)̵ₚ zu Z bei 5:1 bis 20:1 liegt und
das Dispergiermittel in Form seiner freien Base vorliegt.

2. Drucktinte nach Anspruch 1, bei der das Gewichtsverhältnis von (T-(O-A-CO)ₙ)̵ₚ zu Z bei 9:1 bis 13:1 liegt.

3. Drucktinte nach einem der Ansprüche 1 oder 2, bei der das Dispergiermittel dadurch erhältlich ist, daß man das Polyamin bzw. Polyimin mit einer endgruppenverschlossenen Polyoxyalkylencarbonylsäure oder Polyoxyalkenylencarbonylsäure (TPOAC-Säure) der Formel 2: 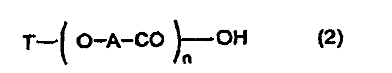 wobei T, A und n die in Anspruch 1 genannte Bedeutung haben, umsetzt.

4. Drucktinte nach Anspruch 3, bei der sich die TPOAC-Säure von 12-Hydroxystearinsäure ableitet.

5. Drucktinte nach einem der Ansprüche 3 oder 4, bei der das zahlenmittlere Molekulargewicht der TPOAC-Säure bei 800 bis 2.000 liegt.

6. Drucktinte nach einem der vorhergehenden Ansprüche, bei der für Z der Rest des Polyethylenimins steht.

7. Drucktinte nach einem der Ansprüche 1 bis 6, bei der als nichtwäßriges Medium ein aromatischer oder aliphatischer Kohlenwasserstoff oder Mischungen davon enthalten ist.

8. Drucktinte nach Anspruch 7, bei der zusätzlich ein C₁₀₋₃₀-aliphatischer Fettalkohol enthalten ist.

9. Drucktinte nach einem der Ansprüche 1 bis 8, bei der das nichtwäßrige Medium einen Löslichkeitsparameter von 7,0 MPa^{1/2} oder weniger aufweist.

10. Drucktinte nach einem der Ansprüche 1 bis 9, bei der zusätzlich ein Fluidisiermittel enthalten ist.

11. Drucktinte nach einem der Ansprüche 1 bis 10, bei der zusätzlich ein Modifikator der Meniskusrückzugsgeschwindigkeit enthalten ist.

12. Drucktinte nach Anspruch 11, bei der als Modifikator der Meniskusrückzugsgeschwindigkeit ein lineares Phenolpolymer enthalten ist.

13. Drucktinte nach einem der vorhergehenden Ansprüche, bei der die Tinte eine Viskosität von weniger als 50 cP bei 25°C aufweist.

14. Verfahren zur druckmäßigen Bebilderung eines Substrats, bei dem man darauf eine Drucktinte gemäß einem der vorhergehenden Ansprüche mit einem Tintenstrahldrucker des Typs Drop-on-Demand aufbringt.

15. Substrat, bedruckt mit einer Tinte gemäß einem der Ansprüche 1 bis 13 oder nach dem Verfahren gemäß Anspruch 14.

16. Tintenstrahldruckerkartusche, enthaltend eine Tinte gemäß einem der Ansprüche 1 bis 13.

## Revendications

1. Encre pour impression à jet d'encre par goutte à la demande comprenant un pigment, un milieu substantiellement non aqueux et un dispersant de formule 1 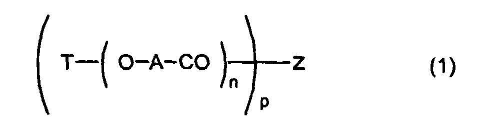 dans laquelle
T représente un atome d'hydrogène ou un groupe qui stoppe la polymérisation ;
A représente un groupe alkylène linéaire en C₈ à C₂₀ ;
Z représente le résidu d'une polyamine ou d'une polyimine dans lequel la masse moléculaire moyenne en nombre vaut de 5000 à 100000 ;
n vaut de 2 à 10 ;
p n'est pas inférieur à 2 ;
le rapport massique de (T- (O-A-CO)ₙ)̵ₚ par rapport à Z vaut de 5:1 à 20:1 ; et
le dispersant est sous la forme d'une base libre.

2. Encre d'impression selon la revendication 1, dans laquelle le rapport massique de (T- (O-A-CO)ₙ)̵ₚ par rapport à Z vaut de 9:1 à 13:1.

3. Encre d'impression selon la revendication 1 ou 2, dans laquelle le dispersant peut être obtenu en faisant réagir la polyamine ou la polyimine avec un acide polyoxyalkylènecarbonyle terminé par un groupe terminal ou un acide polyoxyalkylènecarbonyle (acide TPOAC) de formule 2 : 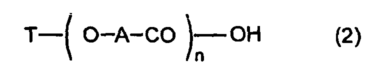 dans laquelle T, A et n sont tels que définis dans la revendication 1.

4. Encre d'impression selon la revendication 3, dans laquelle l'acide TPOAC est dérivé de l'acide 12-hydroxystéarique.

5. Encre d'impression selon la revendication 3 ou 4, dans laquelle la masse moléculaire moyenne en nombre de l'acide TPOAC vaut de 800 à 2000.

6. Encre d'impression selon l'une quelconque des revendications précédentes, dans laquelle Z représente le résidu de la polyéthylèneimine.

7. Encre d'impression selon l'une quelconque des revendications 1 à 6, dans laquelle le milieu non aqueux est un hydrocarbure aromatique ou aliphatique ou des mélanges des ces hydrocarbures.

8. Encre d'impression selon la revendication 7 qui comprend en plus un alcool gras aliphatique en C₁₀ à C₃₀.

9. Encre d'impression selon l'une quelconque des revendications 1 à 8, dans laquelle le milieu non aqueux a un paramètre de solubilité de 7,0 MPa^{½} ou moins.

10. Encre d'impression selon l'une quelconque des revendications 1 à 9 qui comprend en plus un agent de fluidisation.

11. Encre d'impression selon l'une quelconque des revendications 1 à 10 qui comprend en plus un agent modificateur de la vitesse de descente du ménisque (RMV).

12. Encre d'impression selon la revendication 11, dans laquelle l'agent modificateur de la RMV est un polymère phénolique linéaire.

13. Encre d'impression selon l'une quelconque des revendications précédentes, dans laquelle l'encre a une viscosité à 25°C inférieure à 50 cP.

14. Procédé d'impression d'une image sur un substrat comprenant l'application sur celui-ci au moyen d'une imprimante à jet d'encre par goutte à la demande et d'une encre d'impression selon l'une quelconque des revendications précédentes.

15. Substrat imprimé avec une encre selon l'une quelconque des revendications 1 à 13, ou au moyen du procédé selon la revendication 14.

16. Cartouche d'imprimante à jet d'encre contenant une encre selon l'une quelconque des revendications 1 à 13.
